# EUROPEAN PATENT SPECIFICATION

(11) **EP 4 630 768 B1**
(45) Date of publication and mention of the grant of the patent: **11.11.2026**
(21) Application number: 23821182.5
(22) Date of filing: 06.12.2023
(51) Int. Cl.: G01F 23/14, G01F 23/18, C02F 103/04, E03B 7/07, G01L 9/00, G01L 19/00

(54) **MANIFOLD FOR A LIQUID TANK AND WATER PURIFICATION SYSTEM**
VERTEILER FÜR EINEN FLÜSSIGKEITSTANK UND WASSERREINIGUNGSSYSTEM
COLLECTEUR POUR RÉSERVOIR DE LIQUIDE ET SYSTÈME DE PURIFICATION D'EAU

(30) Priority: 09.12.2022 EP 22290067
(43) Date of publication of application: 15.10.2025
(73) Proprietor: Merck Patent GmbH, 64293 Darmstadt (DE)
(72) Inventor: MOREAU, Laurent, 67120 MOLSHEIM (FR); CASSOU, Thierry, 67120 MOLSHEIM (FR)
(74) Representative: Merck Patent Association
(86) International application number: PCT/EP2023/084410
(87) International publication number: WO 2024/121182

(56) References cited:
- EP-B1- 0 770 863
- EP-B1- 2 982 805
- US-A- 3 431 935
- US-B1- 10 822 251
- US-B2- 11 408 759

## Description

### Technical field

The invention relates to a manifold for a liquid tank, preferably for use in a water purification system, and to a water purification system provided with the manifold.

### Background

It is mandatory in a water purification system to measure a tank level. This information is mainly used to initiate the tank filling sequence when the liquid tank is empty and to stop it when the tank is full.

Many standard sensor technologies are available on the market, one of the most used for level measurement is the pressure sensor technology because it is cheap, accurate, reliable, mature and readily available on the market.

The biggest drawback of the pressure sensor technology is the measurement itself as 1 cm of water represents 1 mbar of static pressure. In typical pressure sensors this associates to a very small signal that may be difficult to read especially when the tank is being filled or drained.

The pressure drop generated by the water flow is generally much bigger than 1 mbar. If not taken into account and compensated, this pressure drop spoils the signal and the level cannot be read by the system, i.e. it is seen higher than it is when the tank is filled, lower when it is drained.

If, for example, the pressure drop due to water flow from or into a liquid tank is about 4 mbar, the water level in the tank is underestimated by 4 cm, when the tank is drained.

Typically, the level of water in a liquid tank to be measured in a water purification system is between 0 and 30 cm, corresponding to between 0 and 30 mbar for a small system, and between 0 to 150 cm, corresponding to between 0 and 150 mbar for a large system. To be effective, the level measurement shall measure the tank level with an accuracy better than 1 cm (1 mbar).

In order to take this phenomenon into account when using this level sensor technology, it is known to use two different and separate water flow channels or water connections on the tank, one to fill or drain the tank and one to measure the static pressure. Thus, the water flow pressure drop does not impact the pressure sensor that measures the water height based on the static pressure.

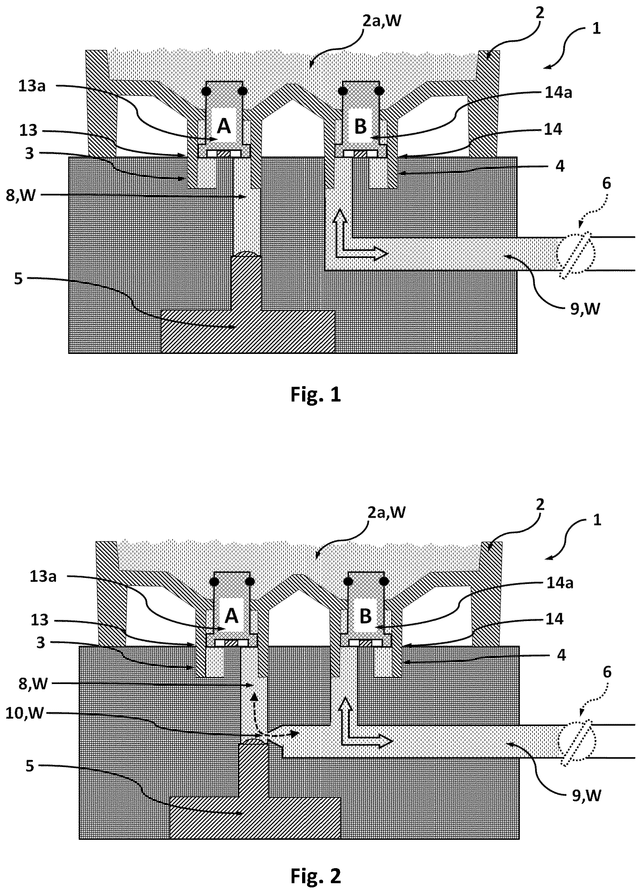

Fig. 1 shows a conceptual diagram of an example of a manifold 1 for a liquid tank 2 according to the prior art. The (second) flow channel 8 downstream of the connection A is the connection for the pressure sensor 5. In this flow channel water flows only when the tank is attached to the manifold but there is no flow and thus no pressure drop when the tank is filled or drained. The (first) flow channel 9 downstream from the connection B is the connection to drain or fill the tank. In the (first) flow channel 9 the typical water flow expected is about 2 liters per minute and the pressure drop is larger than 50 mbar.

The high water flow through the (first) flow channel 9 downstream of the connection B generates a pressure drop that is not seen by the sensor 5 in the (second) flow channel 8 downstream of the connection A so that the pressure measurement is stable and reliable. This kind of solution, however, has a drawback that the water around the pressure sensor 5 is never renewed, a situation which might stimulate bacteria growth and water contamination in general.

The problem is more dominant where a transparent and detachable tank is used because a user may see the system/tank flow connection through the tank or when the tank is pulled out. Potential bacteria growth visible in these portions of the tank may result in a lack of confidence in the water purification device.

An object to be solved is to provide a manifold for a liquid tank, preferably for use in a water purification system, and a water purification system provided with the manifold that avoids or at least reduces water contamination.

EP 2 982 805 B1 discloses an interconnecting device for installation of a water treatment device in a pipeline of a water network, the device comprising a first connection (2) for connection with the pipeline on the inflow side; a second connection for connection with the pipeline on the outflow side; a third connection for connection with the inlet of the water treatment device; a fourth connection for connection with the outlet of the water treatment device; a forward channel that connects the first connection to the third connection; and a return channel that connects the fourth connection to the second connection. The forward channel may comprise a water meter and/or a temperature sensor.

US 11,408,759 B2 discloses various techniques and devices for detecting a level of fluid within a fluid collection receptacle. Sensors, including pressure sensors, may be used to detect information about the liquid within the receptacle, including fluid level, flow rate, and volume.

US 10,822,251 B1 discloses a control valve with a plurality of ports and a plurality of annular flow passages. A piston is selectively movable within a bore through operation of a valve controller, so as to enable liquid flow through a plurality of flow paths, and further discloses the use of a pressure sensor in the interior of an outlet manifold.

EP 0 770 863 B1 and US 3,431,935 disclose manifolds for connecting a differential pressure measuring device to a fluid line.

### Summary

In order to solve the problem described above, the present invention provides a manifold for a liquid tank with the features of claim 1 and a water purification system with the features of claim 12. Preferred embodiments of the manifold for a liquid tank are defined in the dependent claims.

The invention in particular provides a manifold for a liquid tank, comprising a first flow channel for filling and/or draining the liquid into/from the tank, a second flow channel for guiding the liquid in the tank to a pressure sensor mounted in the manifold so as to allow a measurement of the static pressure in the liquid tank, and a third flow channel connecting the first flow channel and the second flow channel, wherein the third flow channel is configured and arranged to replace liquid stagnant in the second flow channel when liquid is filled and/or drained into/from the tank through the first flow channel.

Preferably, the manifold is configured to detachably receive the liquid tank and comprises a first connector for releasably communicating the first flow channel to a mating first tank connector of the liquid tank, and a second connector for releasably communicating the second flow channel to a mating second tank connector of the liquid tank.

Preferably, the manifold comprises a liquid tank configured to be detachably received on the manifold, and the liquid tank comprises a first valve arranged to be automatically opened when the first connector of the manifold is connected to the mating first tank connector, and a second valve arranged to be automatically opened when the second connector of the manifold is connected to the mating second tank connector.

Preferably, the manifold includes the liquid tank such that the volume of the liquid tank communicates with the first flow channel and the second flow channel.

Preferably, the manifold comprises a valve for selectively opening/closing communication of the first flow channel with a flow passage downstream of the first flow channel.

Preferably, the third flow channel is connected to the first flow channel upstream of the valve.

Preferably, the second flow channel has a volume of 1 ml or less.

Preferably, the third flow channel is dimensioned to provide a flow rate through the third flow channel between 0.02 I/h and 5 I/h.

Preferably, the third flow channel is dimensioned to provide a pressure drop of 1 mbar or less when liquid is filled and/or drained into/from the tank through the first flow channel.

Preferably, the first flow channel is dimensioned to provide a flow rate of up to 2.0 I/min, preferably of up to 1.6 I/min.

Preferably, the pressure sensor mounted in the manifold is configured to allow a measurement of the static pressure in the liquid tank of between 0 and 150 mbar, preferably of between 0 and 30 mbar.

### Brief description of the drawings

Fig. 1 shows a conceptual schematic diagram of an exemplary manifold for a liquid tank according to the prior art.
Fig. 2 shows a conceptual schematic diagram of an exemplary manifold for a liquid tank according to the invention.

It is noted that throughout the drawings reference numeral "W" is used to indicate volumes (such as, but not limited to, tank 2, first flow channel 9, second flow channel 8, and third flow channel 10), which when the present manifold is in use are partly or essentially fully filled with liquid, preferably with water. Alternately, when the manifold is not in use, these volumes may be partly or essentially fully filled with air. Thus, the liquid (e.g. water) is not necessarily considered a component of the manifold per se.

### Detailed description

The invention in particular also provides a water purification system comprising a manifold according to the invention.

The manifold for a liquid tank of the invention provides the advantages that the stagnant liquid around the pressure sensor is replaced during operation, i.e. when liquid is filled into and/or drained from the tank, thus avoiding stimulation of bacteria growth and water contamination.

The invention is now described in detail on the basis of a preferred exemplary embodiment by reference to the attached exemplary schematic drawings Fig. 1 and Fig 2.

The manifold for a liquid tank, preferably for a water purification system, of the invention is now described in connection with an exemplary embodiment as shown in Fig. 2.

The manifold 1 for a liquid tank 2 according to the invention is, as far as the basic layout is concerned, similar to the manifolds in the prior art as described in connection with Fig. 1. Thus, the manifold 1 according to the invention comprises the connections A and B for communicating the liquid tank 2 with the channels of the manifold 1, in particular a first flow channel 9 for filling and/or draining the liquid into/from the tank 2, and a second flow channel 8 for guiding the liquid in the tank 2 to a pressure sensor 5 mounted in the manifold 1 so as to allow a measurement of the static pressure in the liquid tank 2. The pressure sensor 5 is mounted in a portion of the manifold 1 that communicates with the second flow channel 8 such that the liquid pressure acts on the sensitive part of the sensor.

The manifold 1 according to the exemplary embodiment also comprises a third flow channel 10 connecting the first flow channel 9 and the second flow channel 8 with each other, wherein the third flow channel 10 is configured and arranged to replace liquid stagnant in the second flow channel 8 when liquid is filled and/or drained into/from the tank 2 through the first flow channel 9. To facility the replacement of liquid in the second flow channel 8, i.e. so as to minimize the dead volume in the second flow channel 8, the third flow channel 10 preferably connects to the second flow channel 8 at a position in close proximity to pressure sensor 5.

The invention is an improvement of the solution described in the description introduction and is based on retaining two separate or distinct hydraulic streams through flow channels from the tank into the manifold but providing a third flow channel between the two streams. The aim of this third flow channel 10 is to provide a controlled water flow through the second flow channel 8 via the first flow channel 9 that is sufficient to replace at least part of the water volume in the second flow channel 8 each time the tank 2 is filled or drained, but is small enough to generate only a minimal pressure drop. Preferably, the pressure drop created by draining the liquid from the second flow channel 8 through the third flow channel 10 is 1 mbar or less.

The dimension of the third flow channel 10 shall be selected depending on the flow rate to be achieved through that channel and the pressure drop generated by the water flow on the first flow channel. In a typical water purification system for laboratory use as used herein to describe the present invention, the equivalent diameter for the third flow channel may be around 0.8 mm.

The manifold 1 is configured to detachably receive the liquid tank 2 and it comprises, as is known in the prior art, a first connector 4 for releasably communicating the first flow channel 9 to a mating first tank connector 14 of the liquid tank 2, and a second connector 3 for releasably communicating the second flow channel 8 to a mating second tank connector 13 of the liquid tank 2 (the connectors are shown schematic in the drawing as they may correspond to existing and well known types of connectors for fluidic communication; the connectors may thus include seals as desired to avoid spilling of liquid in the connected state).

Although not shown the liquid tank may be fixedly integrated with the manifold. In this case the connectors and valves may not be required.

The liquid tank 2 in the detachable variant comprises a first valve 14a arranged to be automatically opened when the first connector 4 of the manifold 1 is connected to the mating first tank connector 14, and a second valve 13a arranged to be automatically opened when the second connector 3 of the manifold 1 is connected to the mating second tank connector 13. Valves may be integrated in the manifold 1, too, such that they are automatically operated upon establishing the connection between the respective connectors. Thus, the channels in the manifold are closed to the environment when no tank is present.

In the detachable and in the integrated variant the manifold 1 may comprise a valve 6 for selectively opening/closing communication of the first flow channel 9 with a flow passage downstream of the first flow channel 9 leading to an outlet or dispenser or downstream water treating equipment. Further, the first flow channel 9 is dimensioned to provide a flow rate of up to about 2 liters per minute (I/min), and preferably up to 1.6 I/min.

As shown, the third flow channel 10 is connected to the first flow channel 9 upstream of the valve 6.

In the manifold for a typical water purification system for laboratory use the second flow channel 8 leading from the second connector 3 to the pressure sensor 5 preferably has a volume of 1 ml or less. Also, in the manifold for a typical water purification system for laboratory use, the third flow channel 10 is preferably dimensioned to provide a flow rate through the third flow channel 10 between 0.02 I/h and 5 I/h.

For use in such a system the third flow channel 10 is dimensioned to provide a pressure drop of 1 mbar or less when liquid is filled and/or drained into/from the tank 2 through the first flow channel 9 in order to achieve the desired accuracy of measurement of the liquid level in the tank.

Further, for use in such a system, the pressure sensor 5 mounted in the manifold 1 at the downstream end of the second flow channel 8 is configured to allow a measurement of the static pressure in the liquid tank 2 of between 0 and 150 mbar, preferably between 0 and 30 mbar.

## Claims

1. A manifold (1) for a liquid tank (2), comprising:
a first flow channel (9) for filling and/or draining the liquid into/from the tank (2);
a second flow channel (8) for guiding the liquid in the tank (2) to a sensor (5) mounted in the manifold (1); and
a third flow channel (10) connecting the first flow channel (9) and the second flow channel (8),
**characterized in that** the sensor (5) mounted in the manifold (1) is a pressure sensor so as to allow a measurement of the static pressure in the liquid tank (2), and the third flow channel (10) is configured and arranged to replace liquid stagnant in the second flow channel (8) when liquid is filled and/or drained into/from the tank (2) through the first flow channel (9).

2. The manifold (1) according to claim 1, wherein the manifold (1) is configured to detachably receive the liquid tank (2) and comprises a first connector (4) for releasably communicating the first flow channel (9) to a mating first tank connector (14) of the liquid tank (2), and a second connector (3) for releasably communicating the second flow channel (8) to a mating second tank connector (13) of the liquid tank (2).

3. The manifold (1) according to claim 2, wherein the manifold (1) comprises a liquid tank (2) configured to be detachably received on the manifold (1), and the liquid tank (2) comprises a first valve (14a) arranged to be automatically opened when the first connector (4) of the manifold (1) is connected to the mating first tank connector (14), and a second valve (13a) arranged to be automatically opened when the second connector (3) of the manifold (1) is connected to the mating second tank connector (13).

4. The manifold (1) according to any one or more of claims 1 to 3, wherein the manifold (1) includes the liquid tank (2) such that the volume of the liquid tank (2) communicates with the first flow channel (9) and the second flow channel (8).

5. The manifold (1) according to any one of claims 1 to 4, wherein the manifold (1) comprises a valve (6) for selectively opening/closing communication of the first flow channel (9) with a flow passage downstream of the first flow channel (9).

6. The manifold (1) according to claim 5, wherein the third flow channel (10) is connected to the first flow channel (9) upstream of the valve (6).

7. The manifold (1) according to any one of claims 1 to 6, wherein the second flow channel (8) has a volume of 1 ml or less.

8. The manifold (1) according to any one of claims 1 to 7, wherein the third flow channel (10) is dimensioned to provide a flow rate through the third flow channel (10) between 0.02 I/h and 5 I/h.

9. The manifold (1) according to any one of claims 1 to 8, wherein the third flow channel (10) is dimensioned to provide a pressure drop of 1 mbar or less when liquid is filled and/or drained into/from the tank (2) through the first flow channel (9).

10. The manifold (1) according to any one of claims 1 to 9, wherein the first flow channel (9) is dimensioned to provide a flow rate of up to 2.0 I/min, preferably of up to 1.6 I/min.

11. The manifold (1) according to any one of claims 1 to 10, wherein the pressure sensor (5) mounted in the manifold (1) is configured to allow a measurement of the static pressure in the liquid tank (2) of between 0 and 150 mbar, preferably of between 0 and 30 mbar.

12. A water purification system comprising a manifold (1) according to any one of claims 1 to 11.

## Patentansprüche

1. Verteiler (1) für einen Flüssigkeitstank (2), umfassend:
einen ersten Strömungskanal (9), um die Flüssigkeit in den Tank (2) einzufüllen und/oder aus diesem zu entleeren;
einen zweiten Strömungskanal (8) zum Leiten der Flüssigkeit in dem Tank (2) zu einem in dem Verteiler (1) angeordneten Sensor (5); und
einen dritten Strömungskanal (10), der den ersten Strömungskanal (9) und den zweiten Strömungskanal (8) verbindet,
**dadurch gekennzeichnet, dass** der in dem Verteiler (1) angeordnete Sensor (5) ein Drucksensor ist, um eine Messung des statischen Drucks in dem Flüssigkeitstank (2) zu ermöglichen, und der dritte Strömungskanal (10) dafür ausgebildet und ausgelegt ist, in dem zweiten Strömungskanal (8) stagnierende Flüssigkeit zu ersetzen, wenn Flüssigkeit durch den ersten Strömungskanal (9) in den Tank (2) eingefüllt und/oder aus diesem entleert wird.

2. Verteiler (1) nach Anspruch 1, wobei der Verteiler (1) dafür ausgebildet ist, den Flüssigkeitstank (2) abnehmbar aufzunehmen, und einen ersten Anschluss (4) zur lösbaren Verbindung des ersten Strömungskanals (9) mit einem dazupassenden ersten Tankanschluss (14) des Flüssigkeitstanks (2) sowie einen zweiten Anschluss (3) zur lösbaren Verbindung des zweiten Strömungskanals (8) mit einem dazupassenden zweiten Tankanschluss (13) des Flüssigkeitstanks (2) umfasst.

3. Verteiler (1) nach Anspruch 2, wobei der Verteiler (1) einen Flüssigkeitstank (2) umfasst, der dafür ausgebildet ist, abnehmbar an dem Verteiler (1) aufgenommen zu werden, und der Flüssigkeitstank (2) ein erstes Ventil (14a), das dafür ausgelegt ist, automatisch geöffnet zu werden, wenn der erste Anschluss (4) des Verteilers (1) mit dem dazupassenden ersten Tankanschluss (14) verbunden wird, sowie ein zweites Ventil (13a), das dafür ausgelegt ist, automatisch geöffnet zu werden, wenn der zweite Anschluss (3) des Verteilers (1) mit dem dazupassenden zweiten Tankanschluss (13) verbunden wird, umfasst.

4. Verteiler (1) nach irgendeinem der Ansprüche 1 bis 3, wobei der Verteiler (1) den Flüssigkeitstank (2) einschließt, so dass das Volumen des Flüssigkeitstanks (2) mit dem ersten Strömungskanal (9) und dem zweiten Strömungskanal (8) in Verbindung steht.

5. Verteiler (1) nach irgendeinem der Ansprüche 1 bis 4, wobei der Verteiler (1) ein Ventil (6) umfasst, um wahlweise die Verbindung des ersten Strömungskanals (9) mit einer stromabwärts des ersten Strömungskanals (9) liegenden Strömungspassage zu öffnen/zu schließen.

6. Verteiler (1) nach Anspruch 5, wobei der dritte Strömungskanal (10) stromaufwärts des Ventils (6) mit dem ersten Strömungskanal (9) verbunden ist.

7. Verteiler (1) nach irgendeinem der Ansprüche 1 bis 6, wobei der zweite Strömungskanal (8) ein Volumen von 1 ml oder weniger aufweist.

8. Verteiler (1) nach irgendeinem der Ansprüche 1 bis 7, wobei der dritte Strömungskanal (10) dafür dimensioniert ist, eine Durchflussrate durch den dritten Strömungskanal (10) zwischen 0,02 l/h und 5 l/h bereitzustellen.

9. Verteiler (1) nach irgendeinem der Ansprüche 1 bis 8, wobei der dritte Strömungskanal (10) dafür dimensioniert ist, einen Druckverlust von 1 mbar oder weniger bereitzustellen, wenn Flüssigkeit durch den ersten Strömungskanal (9) in den Tank (2) eingefüllt und/oder aus diesem entleert wird.

10. Verteiler (1) nach irgendeinem der Ansprüche 1 bis 9, wobei der erste Strömungskanal (9) dafür dimensioniert ist, eine Durchflussrate von bis zu 2,0 l/min, vorzugsweise von bis zu 1,6 l/min, bereitzustellen.

11. Verteiler (1) nach irgendeinem der Ansprüche 1 bis 10, wobei der in dem Verteiler (1) angeordnete Drucksensor (5) dafür ausgebildet ist, eine Messung des statischen Drucks in dem Flüssigkeitstank (2) zwischen 0 und 150 mbar, vorzugsweise zwischen 0 und 30 mbar, zu ermöglichen.

12. Wasseraufbereitungssystem, umfassend einen Verteiler (1) nach irgendeinem der Ansprüche 1 bis 11.

## Revendications

1. Collecteur (1) pour un réservoir de liquide (2), comprenant :
un premier canal d'écoulement (9) pour remplir et/ou vider le liquide à l'intérieur du réservoir (2) et/ou hors de celui-ci ;
un deuxième canal d'écoulement (8) pour guider le liquide dans le réservoir (2) vers un capteur (5) monté dans le collecteur (1) ; et
un troisième canal d'écoulement (10) qui relie le premier canal d'écoulement (9) et le deuxième canal d'écoulement (8),
**caractérisé en ce que** le capteur (5) monté dans le collecteur (1) est un capteur de pression configuré pour permettre une mesure de la pression statique dans le réservoir de liquide (2), et le troisième canal d'écoulement (10) est configuré et agencé pour remplacer du liquide qui stagne dans le deuxième canal d'écoulement (8) lorsque du liquide est rempli et/ou vidé à l'intérieur du réservoir (2) et/ou hors de celui-ci par l'intermédiaire du premier canal d'écoulement (9).

2. Collecteur (1) selon la revendication 1, dans lequel le collecteur (1) est configuré pour recevoir de manière amovible le réservoir de liquide (2) et comprend un premier raccord (4) pour mettre en communication de manière libérable le premier canal d'écoulement (9) avec un premier raccord de réservoir complémentaire (14) du réservoir de liquide (2), et un second raccord (3) pour mettre en communication de manière libérable le deuxième canal d'écoulement (8) avec un second raccord de réservoir complémentaire (13) du réservoir de liquide (2).

3. Collecteur (1) selon la revendication 2, dans lequel le collecteur (1) comprend un réservoir de liquide (2) configuré pour être reçu de manière amovible sur le collecteur (1), et le réservoir de liquide (2) comprend une première vanne (14a) agencée pour être automatiquement ouverte lorsque le premier raccord (4) du collecteur (1) est raccordé au premier raccord de réservoir complémentaire (14), et une seconde vanne (13a) agencée pour être automatiquement ouverte lorsque le second raccord (3) du collecteur (1) est raccordé au second raccord de réservoir complémentaire (13).

4. Collecteur (1) selon l'une quelconque des revendications 1 à 3, dans lequel le collecteur (1) comprend le réservoir de liquide (2) de telle sorte que le volume du réservoir de liquide (2) communique avec le premier canal d'écoulement (9) et le deuxième canal d'écoulement (8).

5. Collecteur (1) selon l'une quelconque des revendications 1 à 4, dans lequel le collecteur (1) comprend une vanne (6) pour ouvrir/fermer de façon sélective la communication entre le premier canal d'écoulement (9) et un passage d'écoulement situé en aval du premier canal d'écoulement (9).

6. Collecteur (1) selon la revendication 5, dans lequel le troisième canal d'écoulement (10) est raccordé au premier canal d'écoulement (9) en amont de la vanne (6).

7. Collecteur (1) selon l'une quelconque des revendications 1 à 6, dans lequel le deuxième canal d'écoulement (8) présente un volume inférieur ou égal à 1 ml.

8. Collecteur (1) selon l'une quelconque des revendications 1 à 7, dans lequel le troisième canal d'écoulement (10) est dimensionné de manière à fournir un débit d'écoulement à travers le troisième canal d'écoulement (10) compris entre 0,02 l/h et 5 l/h.

9. Collecteur (1) selon l'une quelconque des revendications 1 à 8, dans lequel le troisième canal d'écoulement (10) est dimensionné de manière à produire une chute de pression inférieure ou égale à 1 mbar lorsque du liquide est rempli et/ou vidé à l'intérieur du réservoir (2) et/ou hors de celui-ci par l'intermédiaire du premier canal d'écoulement (9).

10. Collecteur (1) selon l'une quelconque des revendications 1 à 9, dans lequel le premier canal d'écoulement (9) est dimensionné de manière à fournir un débit d'écoulement allant jusqu'à 2,0 l/min, de préférence jusqu'à 1,6 l/min.

11. Collecteur (1) selon l'une quelconque des revendications 1 à 10, dans lequel le capteur de pression (5) monté dans le collecteur (1) est configuré pour permettre une mesure de la pression statique dans le réservoir de liquide (2) comprise entre 0 et 150 mbar, de préférence entre 0 et 30 mbar.

12. Système de purification d'eau comprenant un collecteur (1) selon l'une quelconque des revendications 1 à 11.
